# EUROPÄISCHE PATENTSCHRIFT

(11) **EP 0 710 682 B1**
(45) Veröffentlichungstag und Bekanntmachung des Hinweises auf die Patenterteilung: **05.01.2000**
(21) Anmeldenummer: 95116709.7
(22) Anmeldetag: 24.10.1995
(51) Int. Cl.: C08G 12/30, C08G 12/42, C08K 5/3492, C08L 61/26, C08L 61/32, D06M 15/423, D21H 17/51

(54) **Melamin-Formaldehyd-Tränkharze für Folien und Kanten**
Melamine formaldehyde impregnating resins for foils and edges
Résines d'imprégnation mélamine-formaldéhyde pour feuilles et bords

(30) Priorität: 04.11.1994 DE 4439156
(43) Veröffentlichungstag der Anmeldung: 08.05.1996
(73) Patentinhaber: HOECHST AKTIENGESELLSCHAFT, 65926 Frankfurt am Main (DE)
(72) Erfinder: Ott, Jürgen, Dr., D-61118 Bad Vilbel (DE); Schön, Manfred, Dr., D-63110 Rodgau (DE); Adam, Wilhelm, Dr., D-63263 Neu-Isenburg (DE); Scholl, Frank, D-63543 Neuberg (DE); Wolf, Alfons, D-63500 Seligenstadt (DE)
(74) Vertreter: Zounek, Nikolai, Dipl.-Ing.

(56) Entgegenhaltungen:
- EP-A- 0 028 204
- EP-A- 0 268 809
- EP-A- 0 561 432
- DE-A- 1 619 243
- DE-A- 2 655 924
- FR-A- 2 586 023
- GB-A- 867 981
- CHEMICAL ABSTRACTS, vol. 89, no. 24, 11.Dezember 1978 Columbus, Ohio, US; abstract no. 198402m, XP002021786 & PROIZVOD. PERERAB. PLASTMASS SINT. SMOL, Nr. 4, 1978, Seiten 10-12, YU. I. BROKHIN ET AL.:
- CHEMICAL ABSTRACTS, vol. 74, no. 2, 11.Januar 1971 Columbus, Ohio, US; abstract no. 4259s, XP002021787 & JP-B-45 029 516 (JAPAN CARBIDE IND. CO.) 26.September 1970
- CHEMICAL ABSTRACTS, vol. 101, no. 14, 1.Oktober 1984 Columbus, Ohio, US; abstract no. 112181v, XP002021788 & JP-A-59 109 344 (SUMITOMO BAKELITE CO., LTD.) 25.Juni 1984
- JAPAN PLAST. AGE, Bd. 11, Nr. 7, 1973, Seiten 45-51, XP000612153 T. TSUBAKIMOTO ET AL.:
- KUNSTSTOFFE, Bd. 69, Nr. 5, 1979, Seiten 263-265, XP002021785 J. SEEHOLZER:
- CHEMICAL ABSTRACTS, vol. 119, no. 26, 27.Dezember 1993 Columbus, Ohio, US; abstract no. 272671e, XP002021789 & JP-A-05 202 270 (HITACHI CHEM. COMP. LTD.) 10.August 1993

## Beschreibung

Die vorliegende Erfindung betrifft Melamin-Formaldehyd-Tränkharze, die ein Guanamin enthalten, Verfahren zu ihrer Herstellung sowie ihre Verwendung.

Nach herkömmlicher Arbeitsweise werden Folien und Kantenmaterialien für die Beschichtung von Holzwerkstoffen auf Basis von Papier, Vliesen oder Geweben hergestellt durch Imprägnieren mit Harnstoffharzen in wäßrigen Lösungen und Trocknung der Imprägnate gegebenenfalls unter Zugabe von Kunststoffdispersionen zur Elastifizierung.

Aufgrund der hohen Zellstoffquellung in wäßrigen Systemen sind diese Folien und Kanten spröde mit hoher Wasseraufnahme und zeigen in lackiertem Zustand eine optisch wenig ansprechende Oberfläche.

In der FR-A 2 586 023 werden nicht verätherte, mit Thioharnstoff modifizierte Aminoplaste beschrieben. Aus der EP-A 0 028 204 waren vorverlängerte, verätherte Aminoplast-Harze bekannt, die durch Umsetzung von verätherte Methylolgruppen enthaltenden Harnstoffen, cyclischen Harnstoffen, Carbamaten oder Melamin mit einem Guanamin erhältlich sind.

Aus DE-A 23 09 334 ist bekannt, veretherte Methylolmelamine aus (C₁-C₄)-alkoholischen Tränkflotten einzusetzen. Man erhält durch die Unterdrückung der Zellstoffquellung optisch günstigere Oberflächen mit verbesserten Flexibilitäten, die jedoch den Anforderungen der Softformingverarbeitung nicht gerecht werden. Das Verfahren erfordert zudem bei Einsatz von (C₁-C₄)-Alkoholen weitere Maßnahmen zur Abgasaufbereitung. Nach EP-B 0 268 809 und EP 0 342 386 sind u.a. Verfahren bekannt, die bei Imprägnierung von Papier, Vliesen oder Geweben zur Herstellung von Folien und Kantenmaterialien bei Verarbeitung von veretherten Melaminharzen auf den Einsatz von niederen Alkoholen als Lösemittel oder Wasser verzichten.

Die für die Imprägnierung erforderlichen Penetrationseigenschaften der Harze werden durch die Zugabe bzw. den Einbau beispielsweise mehrwertiger hydrophiler Alkohole erreicht.

Produkten solcher Art haftet aufgrund ihrer hydrophilen Modifizierung, insbesondere bei der Softformingverarbeitung, immer noch eine hohe Wasseraufnahme am Substrat an.

Es wurde nun gefunden, daß dieser Nachteil durch Zugabe von Guanaminen, bei sonst gleichen vorteilhaften Eigenschaften aufgehoben werden kann.

Die vorliegende Erfindung betrifft somit modifizierte wäßrige Melamin-Formaldehyd-Harze, enthaltend ein oder mehrere Harze ausgewählt aus
a Melamin-Formaldehyd-Harzen, die mindestens ein Guanamin in einkondensierter Form enthalten;
b Mischungen mindestens zweier Harte der Gruppe a;
c Mischungen mindestens eines Melamin-Formaldehyd-Harzes mit mindestens einem Guanamin;
d Mischungen mindestens eines Harzes der Gruppe a und einer Mischung der Gruppe c;
e Mischungen mindestens eines Harzes der Gruppe a und mindestens eines Guanamins;
dadurch gekennzeichnet, daß das Guanamin aus 1-Alkyl-3,5-diamino-2,4,6-triazinen mit 5 bis 17 Kohlenstoffatomen in der Alkylgruppe ausgewählt ist und daß die modifizierten wäßrigen Melamin-Formaldehyd-Harze zumindest teilweise veräthert sind.

Die Guanamine weisen insbesondere die allgemeine Formel I 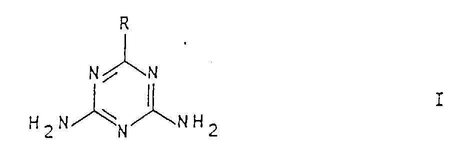 auf,
worin R Wasserstoff, (C₁-C₂₀)-Alkyl, (C₆-C₁₄)-Aryl oder (C₆-C₁₄)-Aryl-(C₁-C₆)-Alkyl bedeutet.

Bevorzugte Guanamine sind Benzoguanamin sowie (C₅-C₁₇)-Alkylguanamine, insbesondere Caprinoguanamin.

Die erfindungsgemäßen Harze können das Guanamin in einkondensierter Form enthalten oder lediglich eine Mischung eines Melamin-Formaldehyd-Harzes mit einem Guanamin darstellen. Selbstverständlich sollen auch Harze umfaßt sein, die sowohl einkondensiertes, wie auch lediglich zugemischtes Guanamin enthalten.

In den erfindungsgemäßen Harzen beträgt das Molverhältnis Melamin : Guanamin : Formaldehyd insbesondere 1 : (0,001 bis 0,5) : (1,3 bis 6).

Die genannten Kondensate können gegebenenfalls mit Alkoholen mindestens teilweise verethert sein. Geeignete Alkohole sind insbesondere (C₁-C₄)-Alkohole, beispielsweise Methanol und Butanol.

Das Molverhältnis Melamin : Alkohol beträgt dabei bevorzugt 1 : (0,8 bis 6).

Die erfindungsgemäßen Harze weisen beispielsweise Festkörpergehalte von 60 bis 85, bevorzugt von 65 bis 80, besonders bevorzugt von 70 bis 78 Gew% auf.

Die erfindungsgemäßen Harze können in an sich bekannter Weise beispielsweise dadurch hergestellt werden, daß zum Beispiel Melamin und das Guanamin mit Formaldehyd umgesetzt werden, gegebenenfalls eine Veretherung mit einem (C₁-C₄)-Alkohol angeschlossen und das erhaltene Produkt auf den gewünschten Festkörpergehalt eingestellt wird.

Die Reaktion mit Formaldehyd kann jedoch auch direkt in Gegenwart der genannten Alkohole durchgeführt werden.

Das zur Harzherstellung verwendete Guanamin kann während oder vor der Kondensationsreaktion zugesetzt werden. Falls erwünscht, kann aber auch ein in bekannter Weise hergestelltes Vorkondensat verwendet werden.

Die erfindungsgemäßen Harze können zur Herstellung von Melaminharzfolien und -kanten verwendet werden. Dazu werden sie auf Papiere, Cellulosevliese oder Cellulose-bahnen mit einem Gewicht von z.B. 40 bis 350 g/m² einseitig oder beidseitig aufgebracht und anschließend getrocknet.

Dieses Aufbringen und Trocknen wird in an sich bekannter Weise so durchgeführt, daß, bezogen auf das Endgewicht der imprägnierten Trägerbahn, 15 bis 60 Gew.%, vorzugsweise 20 bis 50 Gew.%, Festharz enthalten sind. Die an die Aufbringung anschließende Trocknung wird üblicherweise bei einer Temperatur von 110 bis 200°C, vorzugsweise 140 bis 180°C, auf bekannten Vorrichtungen, z.B. in Trockenkammern oder Trockenkanälen (Schwebetrocknern) durchgeführt. Der Restfeuchtegehalt der hergestellten Folien und Kanten liegt normalerweise bei 1 bis 5 Gew.% (als Gewichtsdifferenz nach 5 Minuten bei 160°C).

Die erfindungsgemäßen Harze können Hilfs- und Zusatzmittel enthalten, insbesondere die üblichen Additive. Solche Additive sind beispielsweise Netzmittel, wie Fettalkoholethoxylate oder Alkylphenolethoxylate, wäßrige Dispersionen von Polymerisaten und Copolymerisaten von Acryl- und Methacrylsäureestern oder die Penetration verbessernde Stoffe, insbesondere mehrwertige Alkohole.

Ebenfalls können an sich bekannte saure Katalysatoren bei der erfindungsgemäßen Verwendung zum Einsatz kommen, um eine rasche Aushärtung des erfindungsgemäßen Harzes bei der anschließenden Trocknung zu erreichen.

Als geeignete saure Katalysatoren kommen beispielsweise Ammonium- und Aminsalze, besonders bevorzugt der p-Toluolsulfonsäure oder p-Toluolsulfonsäure selbst in Betracht.

Zur Erzielung einer besseren Flexibilität der hergestellten Imprägnate können den Harzlösungen z.B. auch Polyvinylacetat-Dispersionen, wasserlösliche Alkydharze oder Acrylatdispersionen zugesetzt werden.

Die erfindungsgemäßen Tränkharze werden auf das Trägermaterial aufgebracht, was beispielsweise durch Aufwalzen, Aufrackeln oder Aufsprühen oder über einen Imprägnierprozeß erfolgen kann.

Die erhaltenen beharzten Trägerbahnen sind sowohl zur Beschichtung von Flächen als auch insbesondere zur Beschichtung von Kanten geeignet und erfüllen bei ausgezeichneter Feuchtebeständigkeit auch die Anforderungen, die an Softkanten gestellt werden. Sie zeigen eine ausgezeichnete Elastizität und Flexibilität, gemessen durch den Biegetest beispielsweise mit einem Radius von 5 mm, bei gleichzeitigem guten Überspannverhalten und einer geringen Spaltungsneigung.

### Beispiel 1

In einem 2 l-Mehrhalskolben, mit Rührer, Thermometer, pH-Meter und Rückflußkühler werden 392,1 g (5.11 Mol) wäßriger 39%iger Formaldehyd vorgelegt und auf 68°C erhitzt.

Nach Zugabe von 1,7 ml 2 N Natronlauge, 225 g (1.79 Mol) Melamin und 5 g (0,021 Mol) chemisch reinem Caprinoguanamin wird der Ansatz etwas länger als zur Lösung erforderlich bei 83°C gehalten.

Nach Abkühlen auf 55°C werden 1404 ml (34,66 Mol) Methanol und 2,0 ml 53%ige Salpetersäure hinzugegeben und bis zur klaren Lösung bei 59°C verethert. Der pH wird auf 9,8 eingestellt und die niedrig siedenden Lösemittel im Wasserstrahlvakuum entfernt. Der Festkörpergehalt (2 g, 1 h bei 120°C, Aluschale) wird anschließend mit Wasser auf 72,6 % eingestellt.

Das Harz zeigt eine Auslaufzeit von 63 Sekunden (DIN-4mm-Becher/23°C) und eine Wasserverdünnbarkeit von 1 : 1,2. Die Haltbarkeit beträgt mehr als 3 Monate.

### Beispiel 2 - 4

Diese Beispiele entsprechen Beispiel 1 mit dem Unterschied, daß 230 g (1,83 mol) Melamin mit 4 g (0,0168 mol) (Beispiel 2), mit 3 g (0,0126 mol) (Beispiel 3) oder 2,5 g (0,0105 mol) Caprinoguanamin (Beispiel 4) eingesetzt werden.

### Beispiel 5

Beispiel 1 wird wiederholt.unter Einsatz von Caprinoguanamin technischer Qualität. Die Auslaufzeit beträgt bei einem Festkörpergehalt von 72,5 % (2 g, 1 h bei 120°C, Aluschale) 83 Sekunden (DIN-4mm-Becher/23°C). Die Wasserverdünnbarkeit beträgt bei 20°C 1 : 0,8.

### Beispiele 6 bis 9

In den Beispielen 6 bis 9 werden 230 g (1,83 mol) Melamin mit variierenden Mengen Caprinoguanamin analog Beispiel 5 verwendet, in Beispiel 6: 4 g (0,0168 mol), in Beispiel 7: 3 g (0,0126 mol), in Beispiel 8: 2 g (0,0084 mol) und in Beispiel 9: 1 g (0,0042 mol).

### Beispiele 10 bis 11

Völlig analog zu Beispiel 5 wird ein Harz hergestellt, doch werden 355 g (4,63 mol) (Beispiel 10) bzw. 345 g (4,50 mol) (Beispiel 11) 39%iger Formaldehyd eingesetzt.

### Beispiele 12 bis 13

Die Herstellung der Harze erfolgt gemäß Beispiel 10, doch werden 4 g (0,0168 mol) (Beispiel 12) bzw. 3 g (0,0126 mol) Caprinoguanamin (Beispiel 13) verwendet.

### Beispiel 14

Im Vergleich zu Beispiel 5 erfolgt die Zugabe des Caprinoguanamins vor dem Aufheizen des Formaldehyds. Es wird eine Harzlösung mit einem Festkörpergehalt von 72,5 % (2 g, 1 h bei 120°C, Aluschale) und einer Auslaufzeit von 58 Sekunden (DIN-4mm-Becher/23^{o}C) erhalten.

### Beispiel 15

In einen 2 l-Mehrhalskolben mit Rührer, Thermometer, pH-Meter und Rückflußkühler werden 392, 1 g (5,11 mol) wäßriger 39%iger Formaldehyd vorgelegt und auf 68^{o}C geheizt. Nach Zugabe von 1,7 ml 2N Natronlauge; 200 g (1,59 mol) Melamin und 40 g (0,214 mol) Benzoguanamin wird etwas länger als bis zur Lösung der Feststoffe bei 83^{o}C gehalten. Nach Abkühlen auf 55^{o}C werden 1404 ml (34,66 mol) Methanol und 2,0 ml 53%ige Salpetersäure hinzugegeben und bis zur klaren Lösung bei 59^{o}C verethert. Der pH wird auf 9,8 eingestellt und die niedrigsiedenden Lösemittel im Wasserstrahlvakuum entfernt. Der Festkörpergehalt wird anschließend mit Wasser auf 72,9 % (2 g, 1 h bei 120°C, Aluschale) eingestellt. Das Harz zeigt eine Auslaufzeit von 53 Sekunden (DIN-4mm-Becher/23^{o}C) und eine Wasserverdünnbarkeit bei 20^{o}C von größer 1 : 50. Die Isopropanolverdünnbarkeit bei 20^{o}C beträgt 1 : 9.

### Beispiele 16 bis 19

Diese Beispiele entsprechen Beispiel 15 mit dem Unterschied, daß bei der Herstellung unterschiedliche Mengen an Melamin und Benzoguanamin eingesetzt wurden. In Beispiel 16 wurden 230 g (1,83 mol) Melamin und 5 g (0,027 mol) Benzoguanamin, in Beispiel 17: 220 g (1,75 mol) Melamin und 20 g (0,107 mol) Benzoguanamin, in Beispiel 18: 180 g (1,43 mol) Melamin und 60 g (0,321 mol) Benzoguanamin und in Beispiel 19: 180 g (1,43 mol) Melamin und 90 g (0,481 mol) Benzoguanamin verwendet.

### Beispiel 20

Hier erfolgt die Zugabe des Benzoguanamins im Vergleich zu Beispiel 15 vor dem Aufheizen des Formaldehyds.

### Beispiel 21

230 g (1,83 mol) Melamin, 60 g (0,321 mol) Benzoguanamin und 355 g (4,63 mol) 39%iger Formaldehyd werden völlig analog zu Beispiel 15 umgesetzt. Das farblose Harz besitzt einen Festkörpergehalt von 72,8 % (2 g, 1 h bei 120°C, Aluschale) und eine Auslaufzeit von 105 Sekunden (DIN-4mm-Becher/23^{o}C).

### Vergleichsbeispiel:

Es wird wie in Beispiel 1 verfahren mit 230 g (1,83 Mol) Melamin, ohne Guanamin-Dosierung.

### Anwendungsbeispiele:

Die jeweils erhaltenen Kondensate werden im Gewichtsverhältnis 75 : 25 mit PEG 400 75%ig in Wasser versetzt. Man erhält nach dieser Arbeitsweise niedrigviskose Tränkharze mit ausgezeichnetem Imprägnierverhalten auf Papier, Vliesen oder Geweben.

Die in den Beispielen 6 bis 9 und 15 bis 19 sowie im Vergleichsbeispiel hergestellten Tränkharze werden, jeweils auf Festharz berechnet, mit 2 % p-Toluolsulfonsäure in Form einer 40%igen wäßrigen Lösung und 0,5 % Hypersal XT 793 versetzt und die so erhaltene Tränkflotte im Rakelauftrag auf einen Kantenkarton von 200 g/m² Flächengewicht gewicht aufgebracht. Anschließend wird das Imprägnat bei 160°C unter Umlufteinwirkung getrocknet.

Folgende Ergebnisse wurden erhalten:

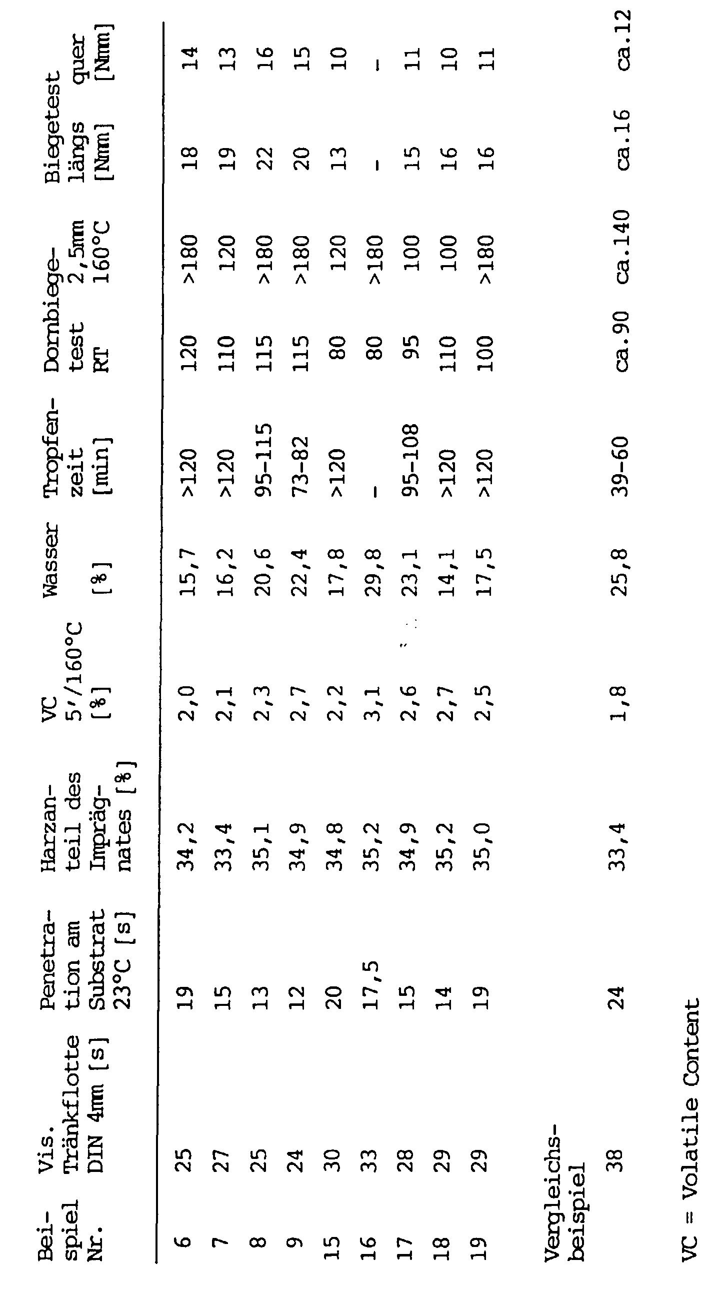

## Patentansprüche

1. Modifizierte wäßrige Melamin-Formaldehyd-Harze, enthaltend ein oder mehrere Harze ausgewählt aus
a Melamin-Formaldehyd-Harzen, die mindestens ein Guanamin in einkondensierter Form enthalten;
b Mischungen mindestens zweier Harze der Gruppe a;
c Mischungen mindestens eines Melamin-Formaldehyd-Harzes mit mindestens einem Guanamin;
d Mischungen mindestens eines Harzes der Gruppe a und einer Mischung der Gruppe c;
e Mischungen mindestens eines Harzes der Gruppe a und mindestens eines Guanamins;
dadurch gekennzeichnet, daß das Guanamin aus 1-Alkyl-3,5-diamino-2,4,6-triazinen mit 5 bis 17 Kohlenstoffatomen in der Alkylgruppe ausgewählt ist, und daß die modifizierten wäßrigen Melamin-Formaldehyd-Harze zumindest teilweise veräthert sind.

2. Modifizierte wäßrige Melamin-Formaldehyd-Harze nach Anspruch 1 herstellbar durch Umsetzung von Melamin und 1-Alkyl-3,5-diaminotriazinen mit 5 bis 17 Kohlenstoffatomen in der Alkylgruppe mit Formaldehyd, anschließendes Veräthern und Verdünnen auf den angestrebten Feststoffgehalt.

3. Modifizierte wäßrige Melamin-Formaldehyd-Harze nach Anspruch 2, dadurch gekennzeichnet, daß das 1-Alkyl-3,5-diaminotriazin während der Kondensationsreaktion zugegeben wird.

4. Modifizierte wäßrige Melamin-Formaldehyd-Harze nach Anspruch 2, dadurch gekennzeichnet, daß ein Vorkondensat des 1-Alkyl-3,5-diaminotriazins vor der Kondensationsreaktion zugegeben wird.

5. Modifizierte wäßrige Melamin-Formaldehyd-Harze nach Anspruch 2, dadurch gekennzeichnet, daß während der Kondensationsreaktion ein Vorkondensat des 1-Alkyl-3,5-diaminotriazins zugegeben wird.

6. Modifizierte wäßrige Melamin-Formaldehyd-Harze nach Anspruch 1, dadurch gekennzeichnet, daß Caprinoguanamin als 1-Alkyl-3,5-diaminotriazin eingesetzt wird.

7. Modifizierte wäßrige Melamin-Formaldehyd-Harze nach Anspruch 1, dadurch gekennzeichnet, daß das Molverhältnis von Melamin zu Guanamin zu Formaldehyd 1 : (0,001 bis 0,5) : (1,3 bis 6) beträgt.

8. Modifizierte wäßrige Melamin-Formaldehyd-Harze nach Anspruch 1, dadurch gekennzeichnet, daß die Harze mit Alkoholen mit 1 bis 4 Kohlenstoffatomen zumindest teilweise veräthert sind.

9. Modifizierte wäßrige Melamin-Formaldehyd-Harze nach Anspruch 1, dadurch gekennzeichnet, daß das Molverhältnis von Melamin zu Alkohol 1 : (0,8 bis 6) beträgt.

10. Verwendung von modifizierten wäßrigen Melamin-Formaldehyd-Harzen nach Anspruch 1 zur Herstellung von Melaminharz-Folien und -Kanten.

11. Melaminharz-Folien und -Kanten hergestellt unter Verwendung eines Harzes nach Anspruch 1.

## Claims

1. A modified aqueous melamine-formaldehyde resin comprising one or more resins chosen from
a melamine-formaldehyde resins which comprise at least one guanamine in co-condensed form;
b mixtures of at least two resins of group a;
c mixtures of at least one melamine-formaldehyde resin with at least one guanamine;
d mixtures of at least one resin of group a and a mixture of group c;
e mixtures of at least one resin of group a and at least one guanamine;
wherein the guanamine is chosen from 1-alkyl-3,5-diamino-2,4,6-triazines having 5 to 17 carbon atoms in the alkyl group, and the modified aqueous melamine-formaldehyde resin is at least partly etherified.

2. A modified aqueous melamine-formaldehyde resin as claimed in claim 1, which can be prepared by reaction of melamine and a 1-alkyl-3,5-diaminotriazine having 5 to 17 carbon atoms in the alkyl group with formaldehyde, subsequent etherification and dilution to the required solids content.

3. A modified aqueous melamine-formaldehyde resin as claimed in claim 2, wherein the 1-alkyl-3,5-diaminotriazine is added during the condensation reaction.

4. A modified aqueous melamine-formaldehyde resin as claimed in claim 2, wherein a precondensate of the 1-alkyl-3,5-diaminotriazine is added before the condensation reaction.

5. A modified aqueous melamine-formaldehyde resin as claimed in claim 2, wherein a precondensate of the 1-alkyl-3,5-diaminotriazine is added during the condensation reaction.

6. A modified aqueous melamine-formaldehyde resin as claimed in claim 1, wherein caprinoguanamine is employed as the 1-alkyl-3,5-diaminotriazine.

7. A modified aqueous melamine-formaldehyde resin as claimed in claim 1, wherein the molar ratio of melamine to guanamine to formaldehyde is 1 : (0.001 to 0.5) : (1.3 to 6).

8. A modified aqueous melamine-formaldehyde resin as claimed in claim 1, wherein the resin is at least partly etherified with an alcohol having 1 to 4 carbon atoms.

9. A modified aqueous melamine-formaldehyde resin as claimed in claim 1, wherein the molar ratio of melamine to alcohol is 1 : (0.8 to 6).

10. The use of a modified aqueous melamine-formaldehyde resin as claimed in claim 1 for the production of melamine resin films and edgings.

11. A melamine resin film or edging produced using a resin as claimed in claim 1.

## Revendications

1. Résines de mélamine-formaldéhyde modifiées aqueuses contenant une ou plusieurs résines prises parmi
a les résines de mélamine-formaldéhyde, lesquelles contiennent au moins une guanamine sous forme condensée ;
b les mélanges d'au moins deux résines du groupe a ;
c les mélanges d'au moins une résine de mélamine-formaldéhyde avec au moins une guanamine ;
d les mélanges d'au moins une résine du groupe a et d'un mélange du groupe c ;
e les mélanges d'au moins une résine du groupe a et d'au moins une guanamine ;
caractérisées en ce que la guanamine est prises parmi les 1-alkyl-3,5-diamino-2,4,6-triazines comportant 5 à 7 atomes de carbone dans le groupe alkyle, et que les résines de mélamine-formaldéhyde modifiées aqueuses sont au moins partiellement éthérifiées.

2. Résines de mélamine-formaldéhyde modifiées aqueuses selon la revendication 1 que l'on peut préparer par réaction de la mélamine et des 1-alkyl-3,5-diamino-triazines comportant de 5 à 7 atomes de carbone dans le groupe alkyle, sur le formaldéhyde, ensuite par éthérification et dilution à la teneur en extrait sec recherchée.

3. Résines de mélamine-formaldéhyde modifiées aqueuses selon la revendication 2 caractérisées en ce que l'on ajoute la 1-alkyl-3,5-diamino-triazine au cours de la réaction de condensation.

4. Résines de mélamine-formaldéhyde modifiées aqueuses selon la revendication 2 caractérisées en ce que l'on ajoute un pré-condensat de la 1-alkyl-3,5-diaminotriazine avant la réaction de condensation.

5. Résines de mélamine-formaldéhyde modifiées aqueuses selon la revendication 2 caractérisées en ce que l'on ajoute un pré-condensat de la 1-alkyl-3,5-diamino-triazine au cours de la réaction de condensation.

6. Résines de mélamine-formaldéhyde modifiées aqueuses selon la revendication 1 caractérisées en ce que l'on emploie la caproguanamine en tant que la 1-alkyl-3,5-diaminotriazine.

7. Résines de mélamine-formaldéhyde modifiées aqueuses selon la revendication 1 caractérisées en ce que le rapport molaire de la mélamine à la guanamine au formaldéhyde est de 1:(0,001 à 0,5):(1,3 à 6).

8. Résines de mélamine-formaldéhyde modifiées aqueuses selon la revendication 1 caractérisées en ce que les résines sont au moins partiellement éthérifiées par des alcools comportant de 1 à 4 atomes de carbone.

9. Résines de mélamine-formaldéhyde modifiées aqueuses selon la revendication 1 caractérisées en ce que le rapport molaire de la mélamine à l'alcool est de 1:(0,8 à 6).

10. Utilisation de résines de mélamine-formaldéhyde modifiées aqueuses selon la revendication 1 pour la préparation de feuilles et de drapages en résines de mélamine.

11. Feuilles et drapages en résine de mélamine préparés à l'aide d'une résine selon la revendication 1.
